# EUROPEAN PATENT SPECIFICATION

(11) **EP 0 755 901 B1**
(45) Date of publication and mention of the grant of the patent: **21.11.2001**
(21) Application number: 96111881.7
(22) Date of filing: 24.07.1996
(51) Int. Cl.: C03C 10/00, G11B 5/64, G11B 5/73, G11B 5/84

(54) **Glass composition for making magnetic disk substrates and magnetic disk substrate**
Glaszusammensetzung zur Herstellung von Magnetplattensubstraten und Magnetplattensubstrat
Composition de verre pour la fabrication de substrats de disque magnétique et substrat de disque magnétique

(30) Priority: 24.07.1995 JP 20837595; 10.07.1996 JP 19981496
(43) Date of publication of application: 29.01.1997
(73) Proprietor: Nihon Yamamura Glass Co., Ltd., Nishinomiya, Hyogo (JP)
(72) Inventor: Taguchi, Tomoyuki, c/o Yamamura Glass Co., Ltd., Nishinomiya, Hyogo (JP); Kuriyama, Ikuo, c/o Yamamura Glass Co., Ltd., Nishinomiya, Hyogo (JP); Kawai, Hideki, c/o Yamamura Glass Co., Ltd., Nishinomiya, Hyogo (JP); Wakabayashi,Hajimu c/o Yamamura Glass Co., Ltd., Nishinomiya, Hyogo (JP)
(74) Representative: Gille Hrabal Struck Neidlein Prop Roos

(56) References cited:
- EP-A- 0 626 353
- EP-A- 0 710 627
- DATABASE WPI Section Ch, Week 9636 Derwent Publications Ltd., London, GB; Class L01, AN 96-358388 XP002019267 & JP 08 169 724 A (OHARA KK) , 2 July 1996
- PATENT ABSTRACTS OF JAPAN vol. 017, no. 700 (C-1145), 21 December 1993 & JP 05 238774 A (YAMAMURA GLASS CO LTD), 17 September 1993,

## Description

### FIELD OF THE INVENTION

The present invention relates to a crystallizable glass composition for producing magnetic disk substrates and a magnetic disk substrate. More particularly, the present invention relates to an easily formable crystallizable glass composition for magnetic disk substrates, and a glass-ceramic magnetic disk substrate which can easily be polished, has excellent mechanical strength, surface flatness, surface smoothness, chemical durability, and heat resistance by precipitation of at least one kind of crystal selected from the group consisting of mullite and aluminum borate crystals as a main crystalline phase, is suitable for application to hard disks of computers, and is obtained from the crystallizable glass composition.

### PRIOR ART OF THE INVENTION

Magnetic disks are mainly used as recording media of computers. Aluminum alloys have heretofore been used as the material of magnetic disk substrates. However, in the recent trend for a smaller size, a thinner thickness, and a higher recording density of magnetic disks, a higher surface flatness and a higher surface smoothness are increasingly desired. Aluminum alloys cannot satisfy the desire, and a material for magnetic disk substrates which can replace aluminum alloys is required.

The properties required for a magnetic disk substrate are flatness and smoothness of the disk surface, high strength, high hardness, chemical durability, migration resistance, and heat resistance of the disk substrate, and the like. Because aluminum alloys are inferior in strength and hardness, it is necessary that the thickness of the disk is increased and the surface is hardened. When the thickness of the disk is decreased, the following problem arises. Undulation is formed on the disk, and the surface flatness becomes inferior. As a result, the magnetic head more frequently clashes into the disk to cause plastic deformation of the disk, and data crush takes place. Therefore, the flying height (the distance between the magnetic head and the magnetic disk) cannot be decreased, and therefore the recording density cannot be increased. Moreover, when the magnetic film is made of platinum system alloys, a phenomenon that an electric potential is induced between the substrate of an aluminum alloy and the magnetic film, and the magnetic film is corroded because of the electrolytic corrosion occurs.

As the substrate which can solve these problems of the aluminum alloy substrates, glass substrates for magnetic disks have been developed. The glass substrates are generally classified into two types which are the chemical strengthening type and the glass-ceramic type.

It is indispensable for glass substrates of the chemical strengthening type that the glass contains an alkali component. The alkali component migrates to the surface of the substrates to make magnetic film characteristics deteriorate. Therefore, it is difficult to satisfy the increasing requirements for achieving a higher recording density. To prevent this phenomenon, an alkali barrier film must be formed. To obtain better start/stop characteristics (CSS characteristics) of a magnetic head, a roughness of angstroms to tens of angstroms is considered to be necessary on the surface of the substrate. For this purpose, glass substrates of the chemical strengthening type must be processed with a mechanical texture or a chemical texture after the final polishing, or a simultaneous texture during forming an alkali barrier film, and this causes a drawback in that the cost of production is increased.

Glass substrates of the glass-ceramic type have been developed to improve the drawbacks of the aluminum alloy substrates and the glass substrates of the chemical strengthening type. Various glass compositions have been proposed for this purpose. However, most of these glass compositions contain large amounts of alkali components. For example, a glass-ceramic composition of SiO₂-Li₂O system is described in the specification of Japanese Patent Application Laid-Open No. Heisei 6(1994)-329440. In this composition, the alkali migration is suppressed because the alkali component is taken into the precipitated crystals to some extent. However, a considerable amount of the alkali component is left remaining in the matrix glass which is not crystalline to cause the possibility that the magnetic film characteristics deteriorate by the alkali migration in a similar manner as that of the glass composition of the chemical strengthening type. There is another drawback in that the glass is harder because of a larger content of SiO₂ in the glass, and therefore the polishing speed cannot be increased. Moreover, when the amount of precipitation of the crystal is large, the polishing is still more difficult. When the amount of precipitation of the crystal is decreased in order to increase the polishing speed, the content of the alkali component in the matrix glass is increased, and therefore the magnetic film characteristics are adversely affected.

Moreover, increasing the coercive force of a magnetic film has recently been attempted as a method of increasing the recording density. As a method of increasing the coercive force, a magnetic disk is heat treated at a high temperature to promote segregation of Cr in a Cr layer which is an underlayer of the magnetic film. In this method, the temperature of the heat treatment must be increased to about 650°C, and the high temperature causes a problem that substrates of aluminum alloys, glass substrates of a chemical strengthening type, and glass-ceramic substrates containing a large amount of alkali components cannot be used as the disk substrate because of the low heat resistance.

In JP 05 238774 A the preparation of a crystallizable glass composition for a low temperature co-fired substrate is described. Such crystallizable glass composition cannot contain TiO₂ as a nuclear-forming agent due to the appearance of black stains. P₂O₅ cannot be present, since otherwise voids will occur.

### SUMMARY OF THE INVENTION

Accordingly, the present invention has the object of providing an easily formable crystallizable glass composition for producing magnetic disk substrates, and a magnetic disk substrate which can easily be polished, has excellent mechanical strength, surface flatness, surface smoothness, chemical durability, and heat resistance, and shows no deterioration of the magnetic film characteristics by alkali migration.

As the result of the extensive studies undertaken by the present inventors to solve the problems described above, it has been discovered that a crystallizable glass composition having a specific composition which precipitates mullite and/or aluminum borate crystals by a heat treatment can easily be formed, and resultant glass-ceramic substrate can easily be polished and is excellent in the physical and chemical characteristics as a magnetic disk substrate. The present invention has been completed on the basis of the discovery.

Thus, the present invention provides:
(1) A crystallizable glass composition for producing magnetic disk substrates comprising, expressed in terms of weight percent on the oxide basis:
   from 20 to 45 % SiO₂; from 0 to 2 % Li₂O;
   from 25 to 45 % Al₂O₃; from 0 to 2 % Na₂O;
   from 10 to 25 % B₂O₃; from 0 to 3% K₂O;
   from 2 to 20 % MgO; from 0.1 to 10 % Ti0₂;
   wherein the total of the contents of Li₂O, Na₂O and K₂O is in a range of from 0 to 5 %; and wherein, in the course of being subjected to a heat treatment, said crystallizable glass composition precipitates a main crystalline phase consisting of at least one kind selected from the group consisting of mullite and aluminum borate crystals;
(2) A crystallizable glass composition for producing magnetic disk substrates comprising, expressed in terms of weight percent on the oxide basis:
   from 20 to 45 % SiO₂; from 0 to 2 % Li₂O;
   from 25 to 45 % Al₂O₃; from 0 to 2 % Na₂O;
   from 10 to 25 % B₂O₃; from 0 to 3 % K₂O;
   from 2 to 20 % MgO; from 0.5 to 10 % P₂O₅;
   wherein, the total of the contents of Li₂O, Na₂O and K₂O is in a range of from 0 to 5%;
   and wherein, in the course of being subjected to a heat treatment, said crystallizable glass composition precipitates a main crystalline phase consisting of at least one kind selected from the group consisting of mullite and aluminum borate crystals;
(3) The crystallizable glass composition for producing magnetic disk substrates described in (1), wherein said crystallizable glass composition further comprises 0.5 to 10 % P₂O₅;
(4) The crystallizable glass composition for producing magnetic disk substrates described in (3),
   the amount of SiO₂ being 25 to 40 %,
   the amount of Al₂O₃ being 28 to 40 %,
   the amount of B₂O₃ being 13 to 22 %,
   the amount of MgO being 2 to 12 %,
   the amount of TiO₂ being 0.1 to 8 %,
   the amount of P₂O₅, being 0.5 to 8 % and
   the total of the contents
   of Li₂O, Na₂O and K₂O being in the range of from 0 to 3 %;
(5) The crystallizable glass composition for producing magnetic disk substrates according to (1), (2), (3) or (4), wherein said crystallizable glass composition further comprises up to 5 % Cu₂O by weight;
(6) A glass-ceramic magnetic disk substrate which is prepared by forming, then heat treating, and thereafter polishing the crystallizable glass composition described in (1), (2), (3), (4) and (5), wherein said disk substrate comprises a main crystalline phase consisting of at least one kind selected from the group consisting of mullite and aluminum borate crystals; and
(7) The glass-ceramic magnetic disk substrate according to (6) wherein said disk substrate includes crystals having an average crystal grain size of 5 µm or less, and has a surface roughness of Ra ≤ 50 Å.

### DETAILED DESCRIPTION OF THE INVENTION

The crystallizable glass composition for producing magnetic disk substrates comprises in a first aspect the following composition in the form of oxides: SiO₂ : 20 to 45 % by weight, Al₂O_{3:} 25 to 45 % by weight, B₂O₃: 10 to 25 % by weight, MgO: from 2 to 20 % by weight, TiO₂: 0.1 to 10 % by weight, Li₂O: 0 to 2 % by weight, Na₂O: 0 to 2 % by weight, and K₂O: 0 to 3% by weight; and precipitates a main crystalline phase consisting of at least one kind selected from the group consisting of mullite and aluminum borate crystals by a heat treatment.
In a further aspect the crystallizable glass composition for producing magnetic disk substrates comprises in a first aspect the following composition in the form of oxides:
SiO₂: 20 to 45 % by weight, Al₂O₃:25 to 45 % by weight, B₂O₃: 10 to 25 % by weight,
MgO: from 2 to 20 % by weight, P₂O₅: 0.5 to 10 % by weight, Li₂O: 0 to 2 % by weight,
Na₂O: 0 to 2 % by weight, and K₂O: 0 to 3% by weight; and precipitates a main crystalline phase consisting of at least one kind selected from the group consisting of mullite and aluminum borate crystals by a heat treatment.

In the crystallizable glass composition for producing magnetic disk substrates of the present invention, where necessary, the following components may additionally be contained: CaO: 0 to 10 % by weight, SrO: 0 to 10 % by weight, BaO: 0 to 10 % by weight, ZnO: 0 to 10 % by weight, ZrO₂: 0 to 5 % by weight, SnO₂: 0 to 5 % by weight, MoO₃: 0 to 5 % by weight, WO₃: 0 to 5 % by weight, Cu₂O: 0 to 5 % by weight, Fe₂O₃: 0 to 5 % by weight, La₂O₃: 0 to 5 % by weight, V₂O₅: 0 to 5 % by weight, and Nb₂O₅: 0 to 5 % by weight.

In the composition of the present invention, SiO₂ is a glass network-former and a component of mullite (3Al₂O₃-2SiO₂) which is the main crystalline phase precipitated by a heat treatment. When the content of SiO₂ is less than 20 % by weight, the precipitation of mullite becomes difficult, and also there is the possibility that the chemical durability of the remaining glass matrix phase and the heat resistance of the glass-ceramic substrate become inferior. When the content of SiO₂ is more than 45 % by weight, the composition is in a stable glass formation region, and the precipitation of the crystals becomes difficult. Moreover, the melting temperature is excessively high, and there is the possibility that the production becomes difficult. Considering the amount of the precipitation of the crystals, the chemical durability, the heat resistance, and the productivity, it is preferable that the content of SiO₂ is in a range of from 25 to 40 % by weight. It is more preferable that the content of SiO₂ is in a range of from 27 to 37 % by weight.

In the composition of the present invention, Al₂O₃ is an intermediate oxide of the glass and a component of mullite and aluminum borate crystals which are the main crystalline phases precipitated by a heat treatment. When the content of Al₂O₃ is less than 25 % by weight, the amount of the precipitation of the crystals is small, and there is the possibility that the strength required for a magnetic disk substrate cannot be obtained, and the heat resistance is inferior. When the content of Al₂O₃ is more than 45 % by weight, the melting temperature is excessively high, and the composition tends to be devitrified to cause the possibility that the forming cannot easily be made. Considering the strength, the heat resistance, and the forming property, it is preferable that the content of Al₂O₃ is in a range of from 28 to 40 % by weight. It is more preferable that the content of Al₂O₃ is in a range of from 30 to 38 % by weight.

In the composition of the present invention, B₂O₃ plays the role as a flux and also is a component of the aluminum borate crystals. When the content of B₂O₃ is less than 10 % by weight, there is the possibility that the melting temperature is excessively high. When the content of B₂O₃ is more than 25 % by weight, the composition tends to be devitrified to cause the possibility that the forming cannot easily be made. Considering the melting property and the forming property, it is preferable that the content of B₂O₃ is in a range of from 13 to 22 % by weight. It is more preferable that the content of B₂O₃ is in a range of from 15 to 20 % by weight.

In the composition of the present invention, MgO is a glass network-modifier and has the function of extending the working temperature range and increasing the chemical durability of the remaining glass matrix phase. When the content of MgO is less than 2 % by weight, the working temperature range becomes narrower, and also there is the possibility that the chemical durability of the remaining glass matrix is not increased. When the content of MgO is more than 20 % by weight, the main crystalline phase precipitated by a heat treatment is cordierite (2MgO·2Al₂O₃·5SiO₂), and therefore there is the possibility that the strength required for a magnetic disk substrate cannot be obtained. Considering the working property, the chemical durability, and the strength, it is preferable that the content of MgO is in a range of from 2 to 12 % by weight. It is more preferable that the content of MgO is in a range of from 3 to 10 % by weight.

In the composition of the present invention, Li₂O, Na₂O, and K₂O are each a flux and improve the melting property of the composition. When the migration resistance of the magnetic disk substrate is taken into consideration, it is preferred that these alkali components are not contained. However, the alkali components are used for improving the melting property and the forming property when the basic composition requires the improvement. Li₂O, Na₂O, or K₂O may be used alone, or two or more components selected from Li₂O, Na₂O, and K₂O may be used in combination. In order to keep the migration resistance of the magnetic disk substrate as high as possible, it is preferred that two or more components are used in combination. When two components selected from Li₂O, Na₂O, and K₂O are used in combination, any combination of two components may be used. In order to keep the migration resistance of the magnetic disk substrate as high as possible, the combination of Li₂O and K₂O is most preferable. In the composition of the present invention, the contents of Li₂O and Na₂O are each 0 to 2 % by weight, the content of K₂O is 0 to 3 % by weight, and the total of the contents of Li₂O, Na₂O, and K₂O is 0 to 5 % by weight, preferably 0.1 to 3 % by weight when the melting property, the forming property, the migration resistance, and the heat resistance are taken into consideration. Moreover, it is more preferable that the total of the contents of Li₂O, Na₂O, and K₂O is 0.3 to 1.5 % by weight. When the content of Li₂O or Na₂O is more than 2 % by weight, or when the content of K₂O is more than 3 % by weight, or when the total of the contents of Li₂O, Na₂O, and K₂O is more than 5 % by weight, there is the possibility that the migration resistance and the heat resistance of the magnetic disk substrate is decreased. Because the alkali free glass-ceramics or the low alkali-containing glass-ceramics is produced as described above, the disk substrates of the present invention can keep the excellent magnetic film characteristics without forming an alkali barrier film on the magnetic disk substrate.

CaO, SrO and BaO which may additionally be contained in the composition of the present invention where necessary are glass network-modifiers. These components have the function of extending the working temperature range and, moreover, increasing the chemical durability of the remaining glass matrix phase. When the content of CaO, SrO or BaO is more than 10 % by weight, the glass becomes excessively stable, and therefore there is the possibility that the amount of the precipitation of the crystals is decreased. Considering the working property, the chemical durability, and the amount of the precipitation of the crystals, it is preferable that the contents of CaO, SrO, and BaO are each in a range of from 0.1 to 7 % by weight. It is more preferable that the contents of CaO, SrO, and BaO are each in a range of from 0.5 to 5 % by weight.

ZnO which may additionally be contained in the composition of the present invention where necessary plays the role as a flux and has the function of increasing the chemical durability of the remaining glass matrix phase. By replacing a part of B₂O₃ as the flux with ZnO, the amount of B₂O₃ which tends to vaporize during melting can be decreased. When the content of ZnO is more than 10 % by weight, there is the possibility that the amount of the precipitation of the crystals is decreased. Considering the melting property, the chemical durability, and the amount of the precipitation of the crystals, it is preferable that the content of ZnO is in a range of from 0 to 7 % by weight. It is more preferable that the content of ZnO is in a range of from 0.1 to 5 % by weight.

TiO₂, P₂O₅, ZrO₂, SnO₂, MoO₃, and WO₃ which may additionally be contained in the composition of the present invention where necessary play the role of nuclear-forming agents. TiO₂ and P₂O₅ work also as a flux. However, when the content of TiO₂ or P₂O₅ is more than 10 % by weight, there is the possibility that the glass tends to be devitrified during the forming. Considering the amount of the precipitation of the crystals, the crystal grain size, the melting property, and the forming property, it is preferable that the content of TiO₂ is in a range of from 0.1 to 8 % by weight. It is more preferable that the content of TiO₂ is in a range of from 0.5 to 6 % by weight. Considering the amount of the precipitation of the crystals, the crystal grain size, the melting property, and the forming property, it is preferable that the content of P₂O₅ is in a range of from 0.5 to 8 % by weight. It is more preferable that the content of P₂O₅ is in a range of from 1 to 7 % by weight. ZrO₂ and SnO₂ play the role of nuclear-forming agent even when small amounts are used and also have the function of increasing the chemical durability of the remaining glass matrix phase. When the content of ZrO₂ or SnO₂ is more than 5 % by weight, it is difficult to achieve uniform melting and the batch stones remain. As the result, there is the possibility that increase in the melting temperature is brought about. MoO₃ and WO₃ have the function of accelerating crystallization in a glass containing a large amount of the B₂O₃ component. When the content of MoO₃ or WO₃ is more than 5 % by weight, there is the possibility that the glass is devitrified during the forming.

Cu₂O, Fe₂O₃, La₂O₃, V₂O₅, and Nb₂O₅ which may additionally be contained in the composition of the present invention where necessary have the function of stabilizing the glass, extending the working temperature range, and therefore increasing the forming property. When the content of Cu₂O, Fe₂O₃, La₂O₃, V₂O₅, or Nb₂O₅ is more than 5 % by weight, the glass becomes excessively stable, and there is the possibility that the amount of the precipitation of the crystals is decreased. Considering the amount of the precipitation of the crystals, it is preferable that the contents of Cu₂O, Fe₂O₃, La₂O₃, V₂O₅, and Nb₂O₅ are each in a range of from 0 to 3 % by weight. Particularly, Cu₂O has the same function as alkali components have, and therefore by means of being contained Cu₂O, the total of the contents of alkali metal oxides can be decreased. Moreover, in case of laser texturing, copper contained in the glass-ceramic disk substrate can absorb the light of the wavelength of the laser beam, and therefore the texture can effectively be formed. Because of above mentioned reasons, it is preferable that the content of Cu₂O is at least 0.1 % by weight. It is more preferable that the content of Cu₂O is at least 0.3 % by weight.

In the composition of the present invention, PbO, Bi₂O₃, F₂, Cs₂O, CuO, and the like may additionally be contained within the range that the properties required for the magnetic disk substrate are not adversely affected.

The crystallizable glass composition for producing magnetic disk substrates of the present invention precipitates a main crystalline phase consisting of at least one kind selected from the group consisting of mullite and aluminum borate crystals in the course of being subjected to a heat treatment. The mullite crystal has a cylindrical shape of a low aspect ratio. The aluminum borate crystals are crystals having, for example, a composition of Al₁₈B₄O₃₃, Al₅(BO₃)O₆, or the like, and have a cylindrical shape of a low aspect ratio. A crystal having a cylindrical shape of a low aspect ratio, such as those described above, does not cause falling-off of the crystal during the polishing. The falling-off of crystals has been the problem up to the present. Because both mullite and aluminum borate crystals have high mechanical strength characteristics, the mechanical strength required for the magnetic disk substrate can sufficiently be obtained even when the content of the crystals are held low, and furthermore, the polishing speed can be increased.

In the crystallizable glass composition for producing magnetic disk substrates of the present invention, subordinate crystalline phases, such as cordierite, Mg-spinel, Zn-spinel, anorthite, celsian, rutile, forsterite, enstatite, willemite, lithium aluminosilicate system, and the like, are sometimes precipitated by the heat treatment in addition to the main crystalline phase described above. The characteristics of the composition of the present invention are not adversely affected by the precipitation of these subordinate crystalline phases.

The magnetic disk substrate of the present invention is a glass-ceramic magnetic disk substrate comprising the main crystalline phase consisting of at least one kind selected from the group consisting of mullite and aluminum borate crystals, which is prepared by forming, the following heat treating, and the following polishing the crystallizable glass composition for magnetic disk substrates of the present invention. The process for forming the crystallizable glass composition is not particularly limited, and the forming can be conducted by the press forming or the casting-slice forming of a glass melted by heating in a furnace or by direct electric melting. The process for heat treating the formed glass composition is not particularly limited, and a suitable process can be selected in accordance with the content of the nuclear-forming agent and the like. A process in which many crystal nuclei are formed by a heat treatment at a relatively low temperature, and then crystals are allowed to grow at an elevated temperature, is preferable in order to obtain fine crystal grains. The crystallizable glass composition of the present invention precipitates the main crystalline phase consisting of at least one kind selected from the group consisting of mullite and aluminum borate crystals in the course of being subjected to the heat treatment. The process for polishing the glass-ceramic substrate after the heat treatment is not particularly limited. The polishing can be conducted in accordance with a conventional process by using, for example, synthetic abrasive grains, such as synthetic diamond, silicon carbide, aluminum oxide, boron carbide, c-BN, silica, zirconium oxide, and the like, or natural abrasive grains, such as natural diamond, cerium oxide, and the like.

The glass-ceramic magnetic disk substrate of the present invention preferably has an average crystal grain size of 5 µm or less, more preferably an average crystal grain size of 3 µm or less, much more preferably an average crystal grain size of 1 µm or less. When the average crystal grain size is more than 5 µm, the mechanical strength of the magnetic disk substrate is decreased, and moreover, there is the possibility that falling-off of crystal grains takes place during the polishing to cause inferior surface roughness of the substrate.

The glass-ceramic magnetic disk substrate of the present invention preferably has a surface roughness of Ra ≤ 50 Å, which is obtained in accordance With Japanese Industrial Standard B 0601-1994. Ra has a great influence on achieving a smaller size, a thinner thickness, and a higher recording density of a magnetic disk. When Ra is more than 50 Å, the flying height cannot be decreased, and therefore there is the possibility that a high recording density cannot be achieved. Considering the higher recording density of the magnetic disk, it is preferable that Ra is 30Å or less. It is more preferable that Ra is 15Å or less.

By using the crystallizable glass composition of the present invention, an excellent glass-ceramic magnetic disk substrate comprising the main crystalline phase consisting of at least one kind selected from the group consisting of mullite and aluminum borate crystals and having a high strength, a high hardness, a good chemical durability, and a high heat resistance can be obtained. Because the composition of the present invention is alkali free or low alkali-containing, a high migration resistance of the magnetic disk substrate can be achieved, and therefore the magnetic film characteristics are kept at the highest level.

The glass-ceramic magnetic disk substrate of the present invention sufficiently satisfies all the flatness and the smoothness of the disk surface, the high strength, the high hardness, the chemical durability, the heat resistance, and the migration resistance of the disk substrate which are required for a magnetic disk substrate. The glass-ceramic magnetic disk substrate of the present invention can more easily be polished than conventional glass-ceramic substrates, such as a Li₂O-SiO₂ system glass-ceramic substrate. The crystal grain size and the amount of the precipitation of the crystals can be controlled by gradually changing the heat treatment schedule or the glass composition, and the formation of the texture can be conducted simultaneously with the polishing in the final polishing process.

To summarize the advantages obtained by the present invention, the crystallizable glass composition of the present invention can easily be formed, precipitates a main crystalline phase consisting of at least one kind selected from the group consisting of mullite and aluminum borate crystals by a heat treatment, and the disk substrate is easily polished. The glass-ceramic magnetic disk substrate having the excellent mechanical strength, surface flatness, surface smoothness, chemical durability, heat resistance, and migration resistance can be prepared from the crystallizable glass composition.

The present invention is described in more detail in the following with reference to examples. However, the present invention is not limited by the examples.

The raw materials used in the examples and the comparative examples are: SiO₂, Al(OH)₃, H₃BO₃, Mg(OH)₂, CaCO₃, SrCO₃, BaCO₃, ZnO, TiO₂, ZrO₂, AlPO₄, SnO₂, MoO₃, WO₃, La₂O₃, Fe₂O₃, V₂O₅, Nb₂O₅, Cu₂O, Li₂CO₃, Na₂CO₃, and K₂CO₃.

In the examples and the comparative examples, the kind of the crystalline phase, the crystal grain size, and Ra were measured by the following methods.

### (1) Kind of the crystalline phase

The obtained polished product was examined by using an X-ray diffraction apparatus.

### (2) Crystal grain size

A sample was prepared by dipping the obtained polished product in a 5 % by weight hydrofluoric acid for 5 seconds. The surface of the sample was observed by a scanning electron microscope. In the observed field of a 10,000 times magnification, 10 crystal grains were selected at random, and the crystal grain size was obtained as the average of longer diameters of these crystal grains.

### (3) Rₐ

The surface of the obtained polished product was observed by using an atomic force microscope (a product of Digital Instruments Company). On the surface of the sample, 5 parts were selected at random. In each part, 4 lines were drawn at random in the observed field of 10 µm x 10 µm, and Ra along each line was measured. Ra was obtained as the average of 20 measurements in total.

### Comparative Example 1

Raw materials for the components are weighed and mixed in such amounts that the glass composition would have the following composition: SiO₂: 23 % by weight, Al₂O₃: 40 % by weight, B₂O₃: 20 % by weight, MgO: 10 % by weight, CaO: 2 % by weight, BaO: 2 % by weight, ZnO: 2 % by weight, and Li₂O: 1 % by weight. The obtained mixture was placed in a platinum crucible in an electric furnace, melted, and stirred to obtain a homogeneous glass. Then, the obtained homogeneous glass was formed into a plate of 50 × 50 × 5 mm. The obtained plate was annealed and cooled to obtain a formed product.

The obtained formed product was heat treated at 700°C for 2 hours, and then at 870°C for 2 hours to precipitate crystalline phase in the glass. The surface of the heat treated product was treated with lapping for 30 minutes by using silicon carbide abrasive grains having the average grain diameter of 10 µm, and then polished for 15 minutes with cerium oxide abrasive grains having the average grain diameter of 1 µm to obtain a polished product.

The polished product contained the main crystalline phase consisting of aluminum borate crystals and mullite. The content of other crystals in the product was very small. The crystal grain size was 1.4 µm, and Ra was 22 Å.

### Examples 1 to 8 and Comparative Examples 2 to 8

Glass compositions were formed and heat treated in accordance with the same procedures as those in Example 1 in accordance with the conditions shown in Table 1. The obtained glass-ceramic products were polished in accordance with the same procedures as those in Example 1.

The kind of the crystalline phase, the crystal grain size, and Ra in the obtained polished glass-ceramic products were measured. The results are shown in Table 1.

**Table 1 - 1**

| Example | Comp. ** 1 | Comp.2 | Comp.3 | 1 | Comp.4 | Comp.5 |
|---|---|---|---|---|---|---|
| Composition (% by weight) | | | | | | |
| SiO₂ | 23 | 26 | 30 | 32 | 33 | 34 |
| Al₂O₃ | 40 | 43 | 39 | 32 | 30 | 35 |
| B₂O₃ | 20 | 15 | 12 | 20 | 23 | 17 |
| MgO | 10 | 8 | 10 | 5 | 13 | 8 |
| CaO | 2 | 3 | 2 | 4 | - | - |
| | | | | | | |
| SrO | - | - | - | - | - | - |
| BaO | 2 | 3 | 2 | 5 | - | - |
| ZnO | 2 | - | 3 | - | - | 3 |
| TiO₂ | - | - | - | - | - | - |
| ZrO₂ | - | - | 1 | - | - | - |
| | | | | | | |
| P₂O₅ | - | - | - | 1 | - | - |
| SnO₂ | - | - | - | - | - | 1 |
| MoO₃ | - | - | - | 1 | - | - |
| WO₃ | - | - | - | - | - | - |
| Li₂O | 1 | - | 1 | - | - | - |
| | | | | | | |
| Na₂O | - | 2 | - | - | - | 1 |
| K₂O | - | - | - | - | 1 | 1 |

| heat treatment 1 | | | | | | |
|---|---|---|---|---|---|---|
| temperature (°C) | 700 | 700 | 700 | 650 | 650 | 700 |
| time (hr) | 2 | 2 | 2 | 2 | 2 | 2 |

| heat treatment 2 | | | | | | |
|---|---|---|---|---|---|---|
| temperature (°C) | 870 | 850 | 860 | 900 | 830 | 900 |
| time (hr) | 2 | 2 | 2 | 2 | 2 | 5 |
| kind of the predominant | Al-B | mullite | mullite | mullite | Al-B | mullite |
| crystalline phase* | mullite | Al-B | - | Al-B | mullite | Al-B |
| kind of the subordinate | - | - | - | - | cordierite | - |
| crystalline phase | - | - | - | - | - | - |
| crystal grain size (µm) | 1.4 | 0.7 | 0.7 | 1.8 | 0.5 | 3.8 |
| Ra (Å) | 22 | 7 | 10 | 19 | 4 | 30 |

| | | | | | | |
|---|---|---|---|---|---|---|
| * Al-B: aluminum borate crystals | | | | | | |
| ** Comp: Comparative | | | | | | |

**Table 1-2**

| Example | Comp.6 | 2 | 3 | Comp.7 | Comp.8 |
|---|---|---|---|---|---|
| Composition (% by weight) | | | | | |
| SiO₂ | 36 | 36 | 37 | 40 | 44 |
| Al₂O₃ | 27 | 34 | 33 | 30 | 26 |
| B₂O₃ | 15 | 16 | 11 | 11 | 18 |
| MgO | 19 | 8 | 3 | 5 | 5 |
| CaO | - | - | - | 7 | 2 |
| | | | | | |
| SrO | - | - | - | 1 | - |
| BaO | - | - | - | - | - |
| ZnO | - | - | 9 | 5 | 2 |
| TiO₂ | - | 4 | 6 | - | - |
| ZrO₂ | - | - | - | - | - |
| | | | | | |
| P₂O₅ | - | - | - | - | - |
| SnO₂ | - | - | - | - | - |
| MoO₃ | - | - | - | - | - |
| WO₃ | - | - | 1 | - | - |
| Li₂O | 1 | 1 | - | 1 | 2 |
| | | | | | |
| Na₂O | 1 | - | - | - | - |
| K₂O | 1 | 1 | - | - | 1 |

| heat treatment 1 | | | | | |
|---|---|---|---|---|---|
| temperature (°C) | 700 | 680 | 680 | 630 | 650 |
| time (hr) | 2 | 2 | 2 | 3 | 2 |

| heat treatment 2 | | | | | |
|---|---|---|---|---|---|
| temperature (°C) | 830 | 950 | 850 | 830 | 880 |
| time (hr) | 2 | 2 | 2 | 2 | 5 |
| kind of the predominant | Al-B | mullite | mullite | mullite | mullite |
| crystalline phase* | - | Al-B | | - | Al-B |
| kind of the subordinate | cordierite | rutile | Al-B | Al-B | - |
| crystalline phase | - | - | Zn-spinel | anorthite | - |
| | - | - | rutile | - | - |
| crystal grain size (µm) | 0.5 | 4.5 | 0.6 | 0.5 | 2.1 |
| Ra (Å) | 5 | 38 | 5 | 5 | 24 |

| | | | | | |
|---|---|---|---|---|---|
| * Al-B: aluminum borate crystals ** Comp. : Comparative | | | | | |

**Table 1-3**

| Example | 4 | 5 | 6 | 7 | 8 |
|---|---|---|---|---|---|
| Composition (% by weight) | | | | | |
| SiO₂ | 35 | 33 | 32 | 32 | 31 |
| Al₂O₃ | 35 | 35 | 33 | 34 | 33 |
| B₂O₃ | 16 | 17 | 16 | 15 | 18 |
| MgO | 5 | 8 | 5 | 5 | 7 |
| CaO | 3 | - | 1.2 | 1.5 | 1.5 |
| | | | | | |
| SrO | - | - | 0.8 | - | - |
| BaO | 0.5 | - | - | - | 0.5 |
| ZnO | 0.5 | - | 1 | 1 | 2 |
| TiO₂ | 2 | 4 | 4 | 4.5 | 3 |
| P₂O₅ | 1.5 | 1 | 5 | 5.6 | 3 |
| | | | | | |
| La₂O₃ | 0.5 | - | - | - | - |
| Fe₂O₃ | - | 0.5 | - | - | - |
| V₂O₅ | - | 0.5 | - | - | - |
| Nb₂O₅ | - | - | 1 | - | - |
| Cu₂O | - | - | - | 0.4 | 1 |
| | | | | | |
| Li₂O | 1 | 1 | 1 | 1 | - |
| Na₂O | - | - | - | - | - |
| K₂O | - | - | - | - | - |

| heat treatment 1 | | | | | |
|---|---|---|---|---|---|
| temperature (°C) | 680 | 690 | 680 | 680 | 695 |
| time (hr) | 2 | 2 | 2 | 2 | 2 |

| heat treatment 2 | | | | | |
|---|---|---|---|---|---|
| temperature (°C) | 850 | 900 | 950 | 960 | 900 |
| time (hr) | 2 | 2 | 2 | 2 | 2 |
| kind of the predominant | mullite | mullite | mullite | mullite | mullite |
| crystalline phase* | Al-B | Al-B | Al-B | Al-B | Al-B |
| kind of the subordinate | - | rutile | rutile | rutile | rutile |
| crystalline phase | - | - | - | - | - |
| crystal grain size (µm) | 0.7 | 0.6 | 0.8 | 0.8 | 0.7 |
| Ra (Å) | 8 | 7 | 8 | 6 | 7 |

| | | | | | |
|---|---|---|---|---|---|
| * Al-B: aluminum borate crystals | | | | | |

All the polished glass-ceramic products prepared by forming, then heat treating, and thereafter polishing the crystallizable glass compositions in Examples 1 to 8 contained mullite, aluminum borate crystals, or both as the main crystalline phase. The crystal grain size of the precipitated crystals was in the range of 0.6 to 4.5 µm, and Ra was in the range of 5 to 38 Å. The glass-ceramic products had the desirable characteristics as magnetic disk substrates.

### Comparative Example 9

Raw materials for the components are weighed and mixed in such amounts that the glass composition would have the following composition: SiO₂: 18 % by Weight, Al₂O₃: 40 % by weight, B₂O₃: 20 % by weight, MgO: 15 % by weight, ZnO: 3 % by weight, TiO₂: 2 % by weight, ZrO₂: 1 % by weight, and Li₂O: 1 % by weight. The obtained mixture was placed in a platinum crucible in an electric furnace, melted, and stirred to obtain a homogeneous glass. Then, the obtained homogeneous glass was formed into a plate of 50 × 50 × 5 mm. The obtained plate was annealed and cooled to obtain a formed product.

The obtained formed product was heat treated at 680°C for 2 hours, and then at 850°C for 2 hours to precipitate crystalline phase in the glass. The surface of the heat treated product was treated with lapping for 30 minutes by using silicon carbide abrasive grains having the average grain diameter of 10 µm, and then polished for 15 minutes with cerium oxide abrasive grains having the average grain diameter of 1 µm to obtain a polished product.

The polished product contained the main crystalline phase consisting of aluminum borate crystals. The content of other crystals in the product was very small. The crystal grain size was 1.2 µm, and Ra was 21 Å.

As for the kind of the crystalline phase, crystal grain size, and Rₐ, the obtained glass-ceramic product had the characteristics required for the magnetic disk substrate of the present invention. However, the chemical durability of this product was inferior because the content of SiO₂ in the glass composition was insufficient.

### Comparative Example 10

Raw materials for the components are weighed and mixed in such amounts that the glass composition would have the following composition: SiO₂: 25 % by weight, Al₂O₃: 48 % by weight, B₂O₃: 15 % by weight, MgO: 8 % by weight, ZnO: 1 % by weight, Li₂O: 1 % by weight, Na₂O: 1 % by weight, and K₂O: 1 % by weight. The obtained mixture was placed in a platinum crucible in an electric furnace, melted, and stirred to obtain a homogeneous glass. This glass composition was devitrified and could not be formed because the content of Al₂O₃ in the glass composition was excessively large.

### Comparative Example 11

Raw materials for the components are weighed and mixed in such amounts that the glass composition would have the following composition: SiO₂: 25 % by weight, Al₂O₃: 28 % by weight, B₂O₃: 28 % by weight, MgO: 12 % by weight, CaO: 2 % by weight, BaO: 2 % by weight, ZnO: 1 % by weight, and TiO₂: 2 % by weight. The obtained mixture was placed in a platinum crucible in an electric furnace, melted, and stirred to obtain a homogeneous glass. This glass composition was devitrified and could not be formed because the content of B₂O₃ in the glass composition was excessively large.

### Comparative Example 12

Raw materials for the components are weighed and mixed in such amounts that the glass composition would have the following composition: SiO₂: 30 % by weight, Al₂O₃: 30 % by weight, B₂O₃: 12 % by weight, MgO: 23 % by weight, CaO: 2 % by weight, ZnO: 2 % by weight, and Li₂O: 1 % by weight. The obtained mixture was placed in a platinum crucible in an electric furnace, melted, and stirred to obtain a homogeneous glass. Then, the obtained homogeneous glass was formed into a plate of 50 × 50 × 5 mm. The obtained plate was annealed and cooled to obtain a formed product.

The obtained formed product was heat treated at 700°C for 2 hours, and then at 950°C for 2 hours to precipitate crystalline phase in the glass. The surface of the heat treated product was treated with lapping for 30 minutes by using silicon carbide abrasive grains having the average grain diameter of 10 µm, and then polished for 15 minutes with cerium oxide abrasive grains having the average grain diameter of 1 µm to obtain a polished product.

The polished product contained the main crystalline phase consisting of cordierite. The content of other crystals in the product was very small. The crystal grain size was 3.9 µm, and Ra was 38 Å.

This glass-ceramic product contained cordierite as the main crystalline phase because the amount of MgO was excessively large, and therefore had a low strength.

The compositions of the glass compositions in Comparative Examples 9 to 12 and the results of the evaluation are shown in Table 2.

**Table 2**

| Comparative Example | 9 | 10 | 11 | 12 |
|---|---|---|---|---|
| Composition (% by weight) | | | | |
| SiO₂ | 18 | 25 | 25 | 30 |
| Al₂O₃ | 40 | 48 | 28 | 30 |
| B₂O₃ | 20 | 15 | 28 | 12 |
| MgO | 15 | 8 | 12 | 23 |
| CaO | - | - | 2 | 2 |
| | | | | |
| BaO | - | - | 2 | - |
| ZnO | 3 | 1 | 1 | 2 |
| TiO₂ | 2 | - | 2 | - |
| ZrO₂ | 1 | - | - | - |
| P₂O₅ | - | - | - | - |
| | | | | |
| SnO₂ | - | - | - | - |
| MoO₃ | - | - | - | - |
| WO₃ | - | - | - | - |
| Li₂O | 1 | 1 | - | 1 |
| Na₂O | - | 1 | - | - |
| | | | | |
| K₂O | - | 1 | - | - |

| heat treatment 1 | | | | |
|---|---|---|---|---|
| temperature (°C) | 680 | - | - | 700 |
| time (hr) | 2 | - | - | 2 |

| heat treatment 2 | | | | |
|---|---|---|---|---|
| temperature (°C) | 850 | - | - | 950 |
| time (hr) | 2 | - | - | 2 |
| kind of the predominant | Al-B | - | - | cordierite |
| crystalline phase* | - | - | - | - |
| kind of the subordinate | - | - | - | - |
| crystalline phase | - | - | - | - |
| crystal grain size (µm) | 1.2 | - | - | 3.9 |
| Ra (Å) | 21 | - | - | 38 |

| | | | | |
|---|---|---|---|---|
| ∗ Al-B: aluminum borate crystals | | | | |

## Claims

1. A crystallizable glass composition for producing magnetic disk substrates comprising, expressed in terms of weight percent on the oxide basis:
from 20 to 45 % SiO₂; from 0 to 2 % Li₂O;
from 25 to 45 % Al₂O₃; from 0 to 2 % Na₂O;
from 10 to 25 % B₂O₃; from 0 to 3 % K₂O;
from 2 to 20 % MgO; from 0.1 to 10 % TiO₂;
wherein, the total of the contents of Li₂O, Na₂O and K₂O is in a range of from 0 to 5 %;
and wherein, in the course of being subjected to a heat treatment, said crystallizable glass composition precipitates a main crystalline phase consisting of at least one kind selected from the group consisting of mullite and aluminum borate crystals.

2. A crystallizable glass composition for producing magnetic disk substcates comprising, expressed in terms of weight percent on the oxide basis:
from 20 to 45 % SiO₂; from 0 to 2 % Li₂O;
from 25 to 45 % Al₂O₃; from 0 to 2 % Na₂O;
from 10 to 25 % B₂O₃; from 0 to 3 % K₂O;
from 2 to 20 % MgO; from 0.5 to 10 % P₂O₅;
wherein, the total of the contents of Li₂O, Na₂O and K₂O is in a range of from 0 to 5 %;
and wherein, in the course of being subjected to a heat treatment, said crystallizable glass composition precipitates a main crystalline phase consisting of at least one kind selected from the group consisting of mullite and aluminum borate crystals.

3. The crystallizable glass composition for producing magnetic disk substrates according to claim 1, further comprising
0.5 to 10 % P₂O₅.

4. The crystallizable glass composition for producing magnetic disk substrates according to claim 3,
the amount of SiO₂ being 25 to 40 %,
the amount of Al₂O₃ being 28 to 40 %,
the amount of B₂O₃ being 13 to 22 %,
the amount of MgO being 2 to 12 %,
the amount of TiO₂ being 0.1 to 8 %,
the amount of P₂O₅ being 0.5 to 8 % and
the total of the contents
of Li₂O, Na₂O and K₂O being in the range of from 0 to 3 %.

5. The crystallizable glass composition for producing magnetic disk substrates according to any of Claims 1, 2, 3 and 4, wherein said crystallizable glass composition further comprises up to 5 % Cu₂O by weight.

6. A glass-ceramic magnetic disk substrate which is prepared by forming, then heat treating, and thereafter polishing the crystallizable glass composition described in any of Claims 1, 2, 3, 4 and 5, wherein said disk substrate comprises a main crystalline phase consisting of at least one kind selected from the group consisting of mullite and aluminum borate crystals.

7. The glass-ceramic magnetic disk substrate according to Claim 6, wherein said disk substrate includes crystals having an average crystal grain size of 5 µm or less, and has a surface roughness of Ra ≤ 50 Å.

## Patentansprüche

1. Eine kristallisierbare Glaszusammensetzung zur Herstellung von Magnetplattensubstraten, welche ausgedrückt in Gewichts-% der Oxidbasis, umfasst:
von 20 bis 45 % SiO₂; von 0 bis 2 % Li₂O;
von 25 bis 45 % Al₂O₃; von 0 bis 2 % Na₂O;
von 10 bis 25 % B₂O₃; von 0 bis 3 % K₂O;
von 2 bis 20 % MgO; von 0,1 bis 10 % TiO₂;
worin der gesamte Gehalt an Li₂O, Na₂O und K₂O im Bereich von 0 bis 5 % liegt;
und bei der sich im Verlauf einer Hitzebehandlung aus der besagten kristallisierbaren Glaszusammensetzung eine kristalline Hauptphase abscheidet, welche aus mindestens einer Art besteht, die aus der aus Mullit und Aluminiumboratkristallen bestehenden Gruppe ausgewählt ist.

2. Eine kristallisierbare Glaszusammensetzung zur Herstellung von Magnetplattensubstraten, welche ausgedrückt in Gewichts-% der Oxidbasis, umfasst:
von 20 bis 45 % SiO₂; von 0 bis 2 % Li₂O;
von 25 bis 45 % Al₂O₃; von 0 bis 2 % Na₂O;
von 10 bis 25 % B₂O₃; von 0 bis 3 % K₂O;
von 2 bis 20 % MgO; von 0,5 bis 10 % P₂O₅;
worin der gesamte Gehalt an Li₂O, Na₂O und K₂O im Bereich von 0 bis 5 % liegt;
und bei der sich im Verlauf einer Hitzebehandlung aus der besagten kristallisierbaren Glaszusammensetzung eine kristalline Hauptphase abscheidet, welche aus mindestens einer Art besteht, die aus der aus Mullit und Aluminiumboratkristallen bestehenden Gruppe ausgewählt ist.

3. Die kristallisierbare Glaszusammensetzung zur Herstellung von Magnetplattensubstraten, gemäß Anspruch 1, welche weiter umfasst
0,5 bis 10 % P₂O₅.

4. Die kristallisierbare Glaszusammensetzung zur Herstellung von Magnetplattensubstraten, gemäß Anspruch 3, bei der,
die Menge SiO₂ 25 bis 40 % ist,
die Menge Al₂O₃ 28 bis 40 % ist,
die Menge B₂O₃ 13 bis 22 % ist,
die Menge MgO 2 bis 12 % ist,
die Menge TiO₂ 0,1 bis 8 % ist,
die Menge P₂O₅ 0,5 bis 8 % ist und
der gesamte Gehalt an Li₂O, Na₂O und K₂O im Bereich von 0 bis 3 % liegt.

5. Die kristallisierbare Glaszusammensetzung zur Herstellung von Magnetplattensubstraten, gemäß einem der Ansprüche 1, 2, 3 und 4, worin besagte kristallisierbare Glaszusammensetzung weiter bis zu 5 Gewichts-% Cu₂O umfasst.

6. Ein glaskeramisches Magnetplattensubstrat, hergestellt durch Formen, dann Hitzebehandlung und danach Polieren einer in einem der Ansprüche 1, 2, 3, 4 und 5 beschriebenen kristallisierbaren Glaszusammensetzungen, wobei besagtes Plattensubstrat eine kristalline Hauptphase umfasst, welche aus mindestens einer Art besteht, die aus der aus Mullit und Aluminiumboratkristallen bestehenden Gruppe ausgewählt ist.

7. Das glaskeramische Magnetplattensubstrat gemäß Anspruch 6, bei dem besagtes Plattensubstrat Kristalle mit einer durchschnittlichen Kristallkorngröße von 5 µm oder weniger enthält und das eine Oberflächenrauigkeit von Ra ≤ 50 Å hat.

## Revendications

1. Composition de verre cristallisable pour la production de substrats de disques magnétiques, comprenant, exprimés en termes de pourcentage en poids ramené à l'oxyde :
de 20 à 45% de SiO₂ ; de 0 à 2% de Li₂O ;
de 25 à 45% d'Al₂O₃ ; de 0 à 2% de Na₂O ;
de 10 à 25% de B₂O₃ ; de 0 à 3% de K₂O ;
de 2 à 20% de MgO ; de 0,1 à 10% de TiO₂ ;
dans laquelle le total des teneurs en Li₂O, Na₂O et K₂O se situe dans une plage de 0 à 5% ; et dans laquelle, lorsqu'elle est soumise à un traitement thermique, ladite composition de verre cristallisable donne une phase cristalline principale composée d'au moins une espèce choisie dans le groupe comprenant la mullite et des cristaux de borate d'aluminium.

2. Composition de verre cristallisable pour la production de substrats de disques magnétiques, comprenant, exprimés en termes de pourcentage en poids ramené à l'oxyde :
de 20 à 45% de SiO₂ ; de 0 à 2% de Li₂O ;
de 25 à 45% d'Al₂O₃ ; de 0 à 2% de Na₂O ;
de 10 à 25% de B₂O₃ ; de 0 à 3% de K₂O ;
de 2 à 20% de MgO ; de 0,5 à 10% de P₂O₅ ;
dans laquelle le total des teneurs en Li₂O, Na₂O et K₂O se situe dans une plage de 0 à 5% ; et dans laquelle, lorsqu'elle est soumise à un traitement thermique, ladite composition de verre cristallisable donne une phase cristalline principale composée d'au moins une espèce choisie dans le groupe comprenant la mullite et des cristaux de borate d'aluminium.

3. Composition de verre cristallisable pour la production de substrats de disques magnétiques selon la revendication 1, comprenant en plus
de 0,5 à 10% de P₂O₅.

4. Composition de verre cristallisable pour la production de substrats de disques magnétiques selon la revendication 3, dans laquelle
la quantité de SiO₂ est de 25 à 40%,
la quantité d'Al₂O₃ est de 28 à 40%,
la quantité de B₂O₃ est de 13 à 22%,
la quantité de MgO est de 2 à 12%,
la quantité de TiO₂ est de 0,1 à 8%,
la quantité de P₂O₅ est de 0,5 à 8% et
le total des teneurs en Li₂O, Na₂O et K₂O se situe dans la plage de 0 à 3%.

5. Composition de verre cristallisable pour la production de substrats de disques magnétiques selon l'une quelconque des revendications 1, 2, 3 et 4, dans laquelle ladite composition de verre cristallisable comprend en plus jusqu'à 5% en poids de Cu₂O.

6. Substrat vitrocéramique pour disques magnétiques, qui est préparé par formage suivi d'un traitement thermique et ensuite d'un polissage de la composition de verre cristallisable décrite dans l'une quelconque des revendications 1, 2, 3, 4 et 5, dans lequel ledit substrat de disque comprend une phase cristalline principale composée d'au moins une espèce choisie dans le groupe comprenant la mullite et des cristaux de borate d'aluminium.

7. Substrat vitrocéramique pour disques magnétiques selon la revendication 8, dans lequel ledit substrat de disque comprend des cristaux ayant une taille de grain cristallin moyen de 5 µm ou moins et possède une rugosité de surface Rₐ ≤ 50 Å.
